# EUROPEAN PATENT APPLICATION

(11) **EP 2 781 263 A2**
(43) Date of publication of application: **24.09.2014**
(21) Application number: 14160232.6
(22) Date of filing: 17.03.2014
(51) Int. Cl.: B01L 3/00

(54) **Microfluidic Device and Control Method Thereof**

(30) Priority: 19.03.2013 US 201361803284 P; 24.06.2013 KR 20130072523
(71) Applicant: Samsung Electronics Co., Ltd., Suwon-si Gyeonggi-do 443-742 (KR)
(72) Inventor: Lee, Jong Gun, Gyeonggi-do (KR); Kim, Na Hui, Gyeonggi-do (KR); Jung, Hyun Ju, Gyeonggi-do (KR)
(74) Representative: Grünecker, Kinkeldey, Stockmair & Schwanhäusser

(57) **Abstract**

A microfluidic device (1) and a control method, the microfludic device (1) inclucing a platform (4) including a chamber configured to accommodate a sample, a channel connected to the chamber, and a metering unit (10) connected to the chamber by the channel and configured to meter an amount of the sample, wherein the metering unit includes a metering chamber (51,52) configured to measure the amount of the sample, and an accommodation chamber (41,42) connected to the metering chamber and configured to prevent the sample from overflowing out of the metering chamber.

## Description

### BACKGROUND

### 1. Field

Apparatuses and methods consistent with exemplary embodiments relate to a microfluidic device and a control method thereof, and more particularly, to a microfluidic device capable of simultaneously performing a plurality of tests by improving the structure of a metering unit, and a control method thereof.

### 2. Description of the Related Art

In order to deliver fluid in a microfluidic structure, a driving pressure is required, and as the driving pressure, a centrifugal force and a capillary pressure may be used, or a pressure of an additional pump may be used. In recent years, disk-type microfluidic devices have been developed in which a microfluidic structure is disposed on a disk-shaped body, and a series of tasks are performed while moving a fluid using a centrifugal force. Such a disk-type microfluidic device is referred to as a Lab compact disk (CD), a Lab-on a disk or a Digital Bio Disk (DBD).

In general, the disk-type microfluidic device includes a chamber to store fluid, a channel allowing fluid to pass therethrough, and a valve to adjust a flow of the fluid, and may be implemented in various combinations of the chamber, the channel and the valve.

The microfluidic device may be used as a sample test device to test samples, such as blood, saliva, and urine. Inside the microfluidic device, a reagent capable of reacting with a particular material of the sample is disposed. A sample is injected into the microfluidic device, and a result of a reaction between the sample and the reagent is detected, thereby testing the sample.

The microfluidic device separates the sample by use of a centrifugal separation chamber. The microfluidic device includes a metering chamber to meter the separated sample, and in the related art technology, one metering chamber is connected to one centrifugal separation chamber, so the number of test items that can be tested in a single disk is limited. In order to improve upon such constraints, the number of chambers in which a centrifugal separation takes place may be increased. However, when the number of chambers increases, the structure of the microfludic device becomes complicated, and the microfluidic device lacks the space for implementing such a complicated structure in a single disk.

### SUMMARY

One or more exemplary embodiments provide a microfluidic device having an improved structure of a metering unit so as to simultaneously perform a plurality of tests at the same time, and a control method thereof.

In accordance with an aspect of an exemplary embodiment, there is provided a microfluidic device including a platform including a chamber, a channel, and a metering unit. The chamber may be configured to accommodate a sample. The channel may be connected to the chamber. The metering unit may be connected to the chamber by the channel and configured to meter an amount of the sample. The metering unit may include a metering chamber and an accommodation chamber. The metering chamber may be configured to measure the amount of the sample. The accommodation chamber may be connected to the metering chamber and may be configured to accommodate the sample to prevent the sample from overflowing out of the metering chamber.

The metering unit may further include a waste chamber connected to the metering chamber and the accommodation chamber and configured to accommodate a portion of the sample inside the accommodation chamber and the channel.

A distance between the accommodation chamber and a center of the platform may be less than a distance between the metering chamber and the center of the platform.

A distance between the waste chamber and a center of the platform may be greater than a distance between the metering chamber and the center of the platform.

The microfluidic device may further include a sample separation chamber configured to separate the sample.

The metering unit may include a first metering unit and a second metering unit configured to simultaneously perform a plurality of tests.

The first metering unit may be connected to a side of the sample separation chamber, and the second metering unit may be connected to another side of the sample separation chamber.

The platform may further include a valve located on at least one of an inlet and an outlet of the metering unit, and configured to control an inflow or outflow into or out of the metering unit.

The platform may further include a reaction chamber configured to accommodate a reagent that causes an optical or electrical reaction with the sample which is delivered to the reaction chamber after being metered by the metering chamber.

The reaction chamber may be located at an outer side of the platform such that a distance between the reaction chamber and a center of the platform is greater than a distance between the metering chamber and the center of the platform.

The platform may further include a detection chamber configured to detect a reaction result of the sample that is reacted in the reaction chamber.

The detection chamber may be located at an outer side of the platform such that a distance between the detection chamber and the center of the platform is greater than a distance between the reaction chamber and the center of the platform.

In accordance with an aspect of another exemplary embodiment, there is provided a microfluidic device including a platform including a channel, an injection chamber, a first metering unit and a second metering unit. The channel may be configured to have a sample to move therethrough. The injection chamber may be connected to the channel and configured to accommodate the sample that is injected into the platform. The first metering unit may be connected to a side of the injection chamber and configured to meter the sample inside the injection chamber. The second metering unit may be connected to another side of the injection chamber and configured to meter a portion of the sample that remains after the sample is metered in the first metering unit.

The platform may further include a sample separation chamber connected to the injection chamber and configured to separate the sample that is injected into the injection chamber.

The sample separation chamber may be located between the injection chamber and each of the first and second metering units such that the sample is configured to be delivered from the injection chamber to each of the first and second metering units by passing through the sample separation chamber.

The first metering unit and the second metering unit may include a first metering chamber and a second metering chamber, respectively, to meter the sample.

The first metering unit and the second metering unit may include a first accommodation chamber and a second accommodation chamber, respectively, which are configured to prevent the samples metered in the first metering chamber and the sample metered in the second metering chamber from overflowing out of the first metering chamber and the second metering chamber, respectively.

The first metering unit and the second metering unit may include a first waste chamber and a second waste chamber, respectively, which are configured to accommodate a portion of the sample remaining after the sample is metered in the first metering chamber and a portion of the sample remaining after the sample is metered in the second metering chamber, respectively.

A first valve may be located between the sample separation chamber and the first metering unit, and a second valve may be located between the sample separation chamber and the second metering unit.

The platform may further include a third valve located on a channel connected to a first waste chamber to control inflow into the first waste chamber, and a fourth valve located on a channel connected to a second waste chamber to control inflow into the second waste chamber.

The platform may further include a fifth valve located on an outlet of the first metering chamber to control movement of the sample metered in the first metering chamber, and a sixth valve located on an outlet of the second metering chamber to control movement of the sample metered in the second metering chamber.

In accordance with an aspect of another exemplary embodiment, there is provided a method of controlling a microfluidic device including a platform, wherein the platform includes a sample separation chamber configured to separate a sample, a first metering chamber and a second metering chamber that are configured to meter the sample, and a first accommodation chamber configured to accommodate a portion of the sample remaining after filling the first metering chamber with the sample to thereby prevent the sample from overflowing out of the first metering chamber, the method including injecting the sample into the platform, moving the sample to the first metering chamber and the first accommodation chamber through the channel, and moving a portion of the sample inside the first accommodation chamber and a portion of the sample inside the sample separation chamber to the second metering chamber, such that the sample in the first metering chamber and the sample in the second metering chamber are metered, respectively.

The method may further include delivering a portion of the sample remaining after the sample is metered in the second metering chamber into a second accommodation chamber to prevent the portion of the sample remaining after the sample is metered in the second metering chamber from overflowing out of the second metering chamber.

The method may further include delivering a portion of the sample remaining after the sample is metered in the first metering chamber and a portion of the sample remaining after the sample is metered in the second metering chamber to a first waste chamber and a second waste chamber that are connected to the first metering chamber and the second metering chamber, respectively.

The delivering of the portions of the sample into the first waste chamber and the second waste chamber includes opening a valve located between the first metering chamber and the first waste chamber and a valve located between the second metering chamber and the second waste chamber such that the portions of the sample move into the first waste chamber and the second waste chamber, respectively.

The method may further include separating the sample in the sample separation chamber, and delivering the sample to the first metering chamber and the second metering chamber.

The delivering of the sample from the sample separation chamber to the first and second metering chambers includes opening a valve located between the sample separation chamber and the first metering chamber and a valve located between the sample separation chamber and the second metering chamber such that the sample moves into the first and second metering chambers.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 is a perspective view illustrating a microfluidic device in accordance with an exemplary embodiment;
FIG. 2 is a drawing illustrating a metering unit of the microfluidic device in accordance with an exemplary embodiment;
FIGS. 3A, 3B, 3C, 3D and 3E are drawings showing the flow of a sample in the microfluidic device in accordance with an exemplary embodiment;
FIG. 4 is a drawing illustrating a microfluidic device in accordance with another exemplary embodiment; and
FIG. 5 is a flowchart showing a method of controlling a microfludic device in accordance with an exemplary embodiment.

### DETAILED DESCRIPTION

Reference will now be made in detail to the exemplary embodiments, examples of which are illustrated in the accompanying drawings, wherein like reference numerals refer to like elements throughout.

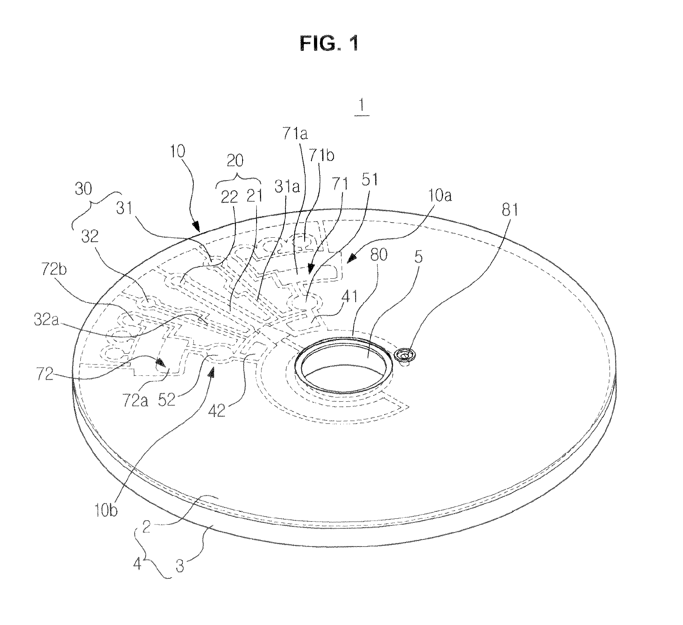

FIG. 1 is a perspective view illustrating a microfluidic device in accordance with an exemplary embodiment.

Referring to FIG. 1, a microfluidic device 1 includes a platform 4 in the form of a rotatable disk, at least one chamber divided in the platform 4 to accommodate fluid, and at least one channel allowing fluid to pass therethrough. In addition, the microfluidic device 1 may be provided with a barcode or other identifying device (e.g., RFID chip, etc.) at a side surface of the platform 4.

The platform 4 may rotate about a center 5 thereof. In the chambers and channels disposed in the platform 4, the movement of samples, centrifugation, and mixing may take place due to the centrifugal force according to rotation of the platform 4.

The platform 4 may be formed of plastic material that has a biologically inactive surface and is easy to mold, such as acryl, polymethylsiloxane (PDMS), and polymethylmethacrylate (PMMA). However, the material forming the platform 4 is not limited thereto, and various materials having chemical and biological stability and a mechanical processability may be used.

The platform 4 may be formed of a plurality of layers of panels. An embossed or engraved structure corresponding to the chamber or the channel is formed on surfaces of the panels that make contact with each other, and the panels are bonded to each other, thereby providing a space and a path inside the platform 4.

For example, the platform 4 may have a structure including a first substrate 2 and a second substrate 3 attached to the first substrate 2, or a structure having a partition panel disposed between the first substrate 2 and the second substrate 3 to define at least one chamber to accommodate fluid and at least one channel allowing fluid to pass therethrough. Alternatively, the platform 4 may have various other shapes. The first substrate 2 and the second substrate 3 may be formed of thermoplastic resin, although are not limited thereto.

The bonding of the first substrate 3 and the second substrate 3 may be achieved using various methods, such as an adhering method using adhesive, such as, for example, a double sided adhesive tape, an ultrasonic welding method, and a laser welding method. It is understood that other methods of bonding the first and second substrates 2 and 3 may also be used.

Hereinafter, microfluidic structures disposed within the platform 4 to test a sample will be described.

A sample may be obtained by mixture of a fluid and a particle-shaped material having a larger density than the fluid. For example, the sample may include a biological sample, such as blood, saliva or urine.

An injection chamber 80 may be disposed at an inner side in a radial direction of the platform 4. The injection chamber 80 accommodates a predetermined amount of the sample, and the injection chamber 80 is provided at an upper surface thereof with a sample injection port 81 through which the sample is injected into the injection chamber 80.

The entire sample in the mixture state in which the fluid and the particle-shaped material are mixed together may be used when performing a test using a fluid. In addition, a sample separation chamber 20 may be provided at an outer side of the platform 4 in a radial direction of the injection chamber 80 to centrifuge the sample by use of the rotation of the platform 4. This feature will be described later.

The sample separated in the sample separation chamber 20 is delivered to the metering unit 10. The metering unit 10 includes a first metering unit 10a and a second metering unit 10b. The first metering unit 10a and the second metering unit 10b include a metering chamber 51 and a metering member 52 that are configured to meter fluid, respectively, and a first accommodation chamber 41 and a second accommodation chamber 42 that are configured to prevent fluid remaining after being metered from overflowing out of the metering chambers 51 and 52, respectively. In addition, the first metering unit 10a and the second metering unit 10b may have a waste chamber 31 and a waste chamber 32, respectively, collectively forming waste chamber 30, to accommodate fluid remaining after being metered. The metering unit 10 will be described later in detail.

The sample metered in the metering unit 10 is delivered to reaction units 71 and 72 in which the sample is tested.

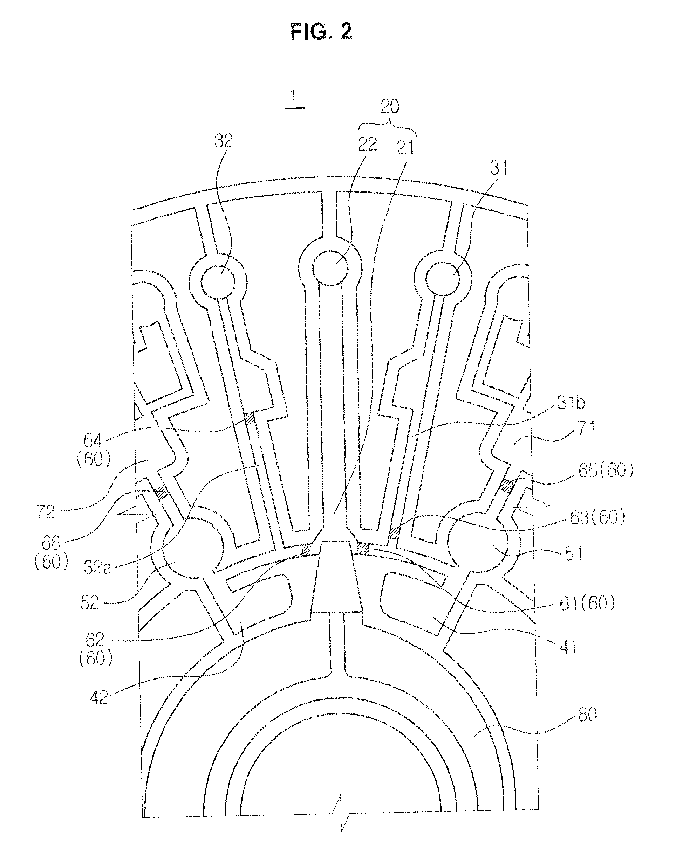

FIG. 2 is a drawing illustrating a metering unit of the microfluidic device in accordance with an exemplary embodiment.

Referring to FIG. 2, the sample injected into the injection chamber 80 is delivered to the sample separation chamber 20, and is centrifuged through a rotation of the platform 4. The sample separation chamber 20 includes a supernatant collecting unit 21 provided in the form of a channel extending from the injection chamber 80 radially outwardly, and a sediment collecting unit 22 disposed at an outer side of the supernatant collecting unit 21 in a radial direction to provide a space for accommodating sediment having a relatively great weight. In a case in which the sample is blood, when the platform 4 rotates, a blood corpuscle is collected in the sediment collecting unit 22, and serum having a relatively low weight is collected in the supernatant collecting unit 21. Accordingly, the blood is separated into the blood corpuscle and the serum in the sample separation chamber 20, and the serum is used in the test.

In addition, the sample is introduced to the metering unit 10 to be metered at a predetermined amount required for a test. Although the metering unit 10 is illustrated as being connected to the sample separation chamber 20, in a case in which the microfluidic device 1 is not provided with the sample separation chamber 20, the metering unit 10 may be directly connected to the injection chamber 80. As shown in FIGS. 1 and 2, the first metering unit 10a is located at one side of the sample separation chamber 20, and the second metering unit 10b is located at the other side of the sample separation chamber 20. In a case in which the sample separation chamber 20 is not provided, each of the metering units 10a and 10b may be connected to the injection chamber 80.

The first metering unit 10a and the second metering unit 10b may include the metering chamber 51 and the metering chamber 52 to meter a desired amount of the sample. The metering chambers 51 and 52 may be located at outer sides of the injection chamber 80 in the radial direction of the platform 4. The metering chamber 51 of the first metering unit 10a is also referred to as the first metering chamber 51, and the metering chamber 52 of the second metering unit 10b is also referred to as the second metering unit 52. A valve 60 may be located between the sample separation chamber 20 and each of the metering units 10a and 10b to control flow of fluids toward the metering units 10a and 10b. The valve 60 will be described later.

The first metering unit 10a and the second metering unit 10b may further include an accommodation chamber 41 and an accommodation chamber 42, respectively, that are configured to accommodate the sample to prevent the sample from overflowing out of the first and second metering units 10a and 10b. The accommodation chamber 41 of the first metering unit 10a is also referred to as a first accommodation chamber 41, and the accommodation chamber 42 of the second metering unit 10b is also referred to as a second accommodation chamber 42. The first and second accommodation chambers 41 and 42 may be located closer to the center of the platform 4 than the metering chambers 51 and 52. In this manner, the samples remaining after being metered by the metering chambers 51 and 52 are accommodated. The samples remaining after being metered in the metering chambers 51 and 52 are accommodated in the accommodation chambers 41 and 42. In accordance with an exemplary embodiment, a sample of the first accommodation chamber 41 may be moved to the second metering chamber 52, and a sample of the second accommodation chamber 42 may be moved to the waste chamber 32. The first and second accommodation chambers 41 and 42 may be depressed from a surface of the platform 4 to a depth deep enough to accommodate samples that remain after being metered. A discharge port is provided through surfaces of the accommodation chambers 41 and 42.

The first and second metering units 10a and 10b may further include the waste chambers 31 and 32 to accommodate samples inside of the accommodation chambers 41 and 42, and samples inside of channels 31 b and 32a.

The waste chamber of the first metering unit 10a is also referred to as a first waste chamber 31, and the waste chamber of the second metering unit 10b is also referred to as a second waste chamber 32. The first and second waste chambers 31 and 32 are located at a distance which is farther away from the center 5 of the platform 4 than a distance which the metering chambers 51 and 52 are located from the center 5 of the platform 4.

The metering units 10a and 10b may be connected to the reaction units 71 and 72 in which the samples are tested. Since the metering chambers 51 and 52 that accommodate samples are connected to the reaction units 71 and 72, a test may be performed using the sample inside of the metering chambers 51 and 52. The reaction units 71 and 72 may be located at outer sides of the center of the platform 4 at a distance which is farther from the center 5 of the platform 4 than a distance which the metering chambers 51 and 52 are located from the center 5 of the platform 4.

The reaction unit 71 may include a reaction chamber 71 a and a detection chamber 71 b, and the reaction unit 72 may include a reaction chamber 72a and a detection chamber 72b. The reaction chambers 71 a and 72a may be located at outer sides of the platform 4 at a distance which is farther from the center 5 of the platform 4 than a distance which the metering chambers 51 and 52 are located from the center 5 of the platform 4. That is, the distances between the center 5 of the platform 4 and the reaction chambers 71a and 72a are greater than the distances between the center 5 of the platform 4 and the metering chambers 51 and 52.

The samples metered through the metering chambers 51 and 52 may be delivered to the reaction chambers 71 a and 72a. Various types and concentrations of reagents may be injected into the reaction chambers 71 a and 72a in advance, to produce reactions that may be optically or electrically detected. The reagent may be accommodated in the reaction chambers 71 a and 72a in the form of a solid, although is not limited thereto, and may also be, for example, a liquid or gas. An example of the optically detectable reaction may be fluorescence or a change of optical density. However, the usage of the reaction chambers 71 a and 72a is not limited thereto.

The samples reacted with the reagents may be delivered from the reaction chamber 71a and 72a to the detection chambers 71b and 72b and thus detected through various sensors. The detection chambers 71b and 72b may be located at outer sides of the platform 4 at a distance which is farther from the center 5 of the platform 4 than a distance which the reaction chambers 71a and 72a are located from the center 5 of the platform 4. That is, the distances between the center 5 of the platform 4 and the detection chambers 71b and 72b are greater than the distances between the center 5 of the platform 4 and the reaction chambers 71 a and 72a.

Valves 60 may be located between the chambers described above to control the flow of fluid. In detail, a first valve 61 and a second valve 62 may be located at an inlet of the first metering unit 10a and an inlet of the second metering unit 10b, respectively. In more detail, the first valve 61 and the second valve 62 may be located on an inlet of the first metering chamber 51 and an inlet of the second metering chamber 52, respectively. A third valve 63 and a fourth valve 64 may be located at an inlet of the first waste chamber 31 and an inlet of the second waste chamber 32, respectively. A fifth valve 65 and a sixth valve 66 may be located at an outlet of the first metering unit 10a and an outlet of the second metering unit 10b, respectively. That is, the fifth valve 65 and the sixth valve 66 may be located at an outlet of the first metering chamber 51 and an outlet of the second metering chamber 52, respectively.

The valves 60 may be implemented as various types of valves, including, for example, a valve that may be opened when an amount of pressure equal to or greater than a predetermined level of pressure is applied thereto, for example, a capillary valve, or a valve that may be actively operated by receiving power or energy from outside according to an operation signal. The microfluidic device 1 in accordance with an exemplary embodiment is implemented as a phase transition valve that operates by absorbing energy from outside.

Each valve is disposed between the first substrate 2 and the second substrate 3 that form the platform 4 as a three-dimensional structure or an approximately two dimensional structure, to block the flow of fluid, and melts at a high temperature to move into a nearby marginal space and thereby open the channels.

An external energy source (not shown) may be disposed outside the platform 4 to emit light to apply heat to the valve 60. The external energy source (not shown) emits light toward the valve 60 to open the valve 60.

The valve 60 may be formed of heat generation particles dispersed in a phase change material. The heat generation particles may have a size suitable for moving in a channel having a width of several hundreds or several thousands of micrometers (µm). Upon radiation of light, for example, a laser, the heat generation particles generate heat as the temperature thereof is rapidly increased by the energy of the light. To achieve such a characteristic of the heat generation particles, the heat generation particles may have a structure including a core formed of a metal component and a hydrophobic shell. For example, the heat generation particles may have a structure including a core formed of iron (Fe) and a shell formed of a plurality of surfactant components surrounding the iron (Fe) which are coupled to the iron (Fe). Commercial materials dispersed in carrier oil may be used for the heat generation particles.

The phase change material may be, for example, wax, although is not limited thereto. As the heat generation particles transmit the absorbed optical energy to a surrounding area in the form of thermal energy, the wax is melted by the thermal energy and has a fluidity, thereby breaking the valve and opening a flow path. The wax should have an appropriate melting point. If the melting point is too high, the time required for the wax to melt after the light radiation is started is too long, making it difficult to precisely control the time point of opening the valve 60. In contrast, if the melting point is too low, the wax is partially melted in a state during which light is emitted, and thus fluid may leak too early. Various types of wax may be used, such as, for example, a paraffin wax, a microcrystalline wax, a synthetic wax or a natural wax.

The phase change material may be a gel or a thermoplastic resin. The gel may be formed of polyacrylamide, polyacrylates, polymethacrylates, or polyvinylamides. In addition, as the thermoplastic resin, cyclo olefin copolymer (COC), polymethyl methacrylate (PMMA), polycarbonate (PC), polystyrene (PS), polyoxymethylene (POM), perfluoroalkoxy (PFA), polyvinyl chloride (PVC), polypropylene (PP), polyether ether ketone (PEEK), polyamide (PA), polysulfone (PSU) or polyvinylidene fluoride (PVDF) may be used.

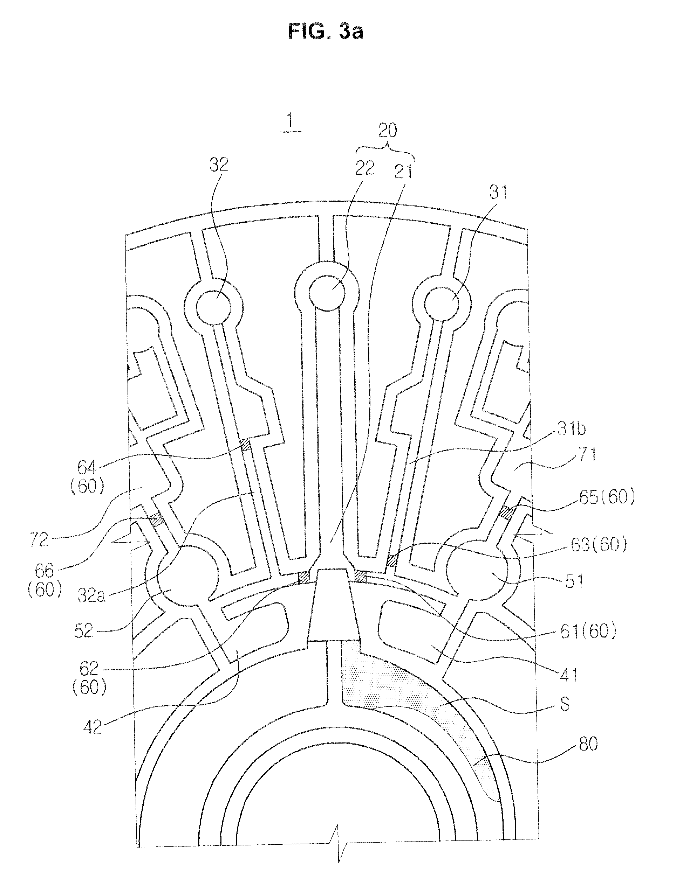

FIGS. 3A to 3E are drawings showing the flow of a sample in the microfluidic device in accordance with an exemplary embodiment.

According to an exemplary embodiment, the flow of a sample in the microfluidic device will be described with reference to FIGS. 3A to 3E.

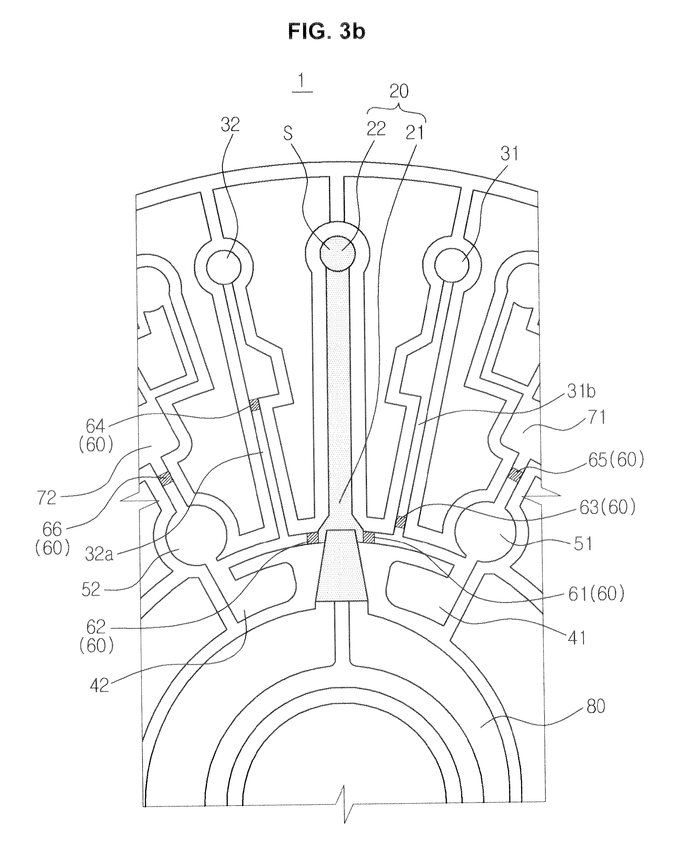

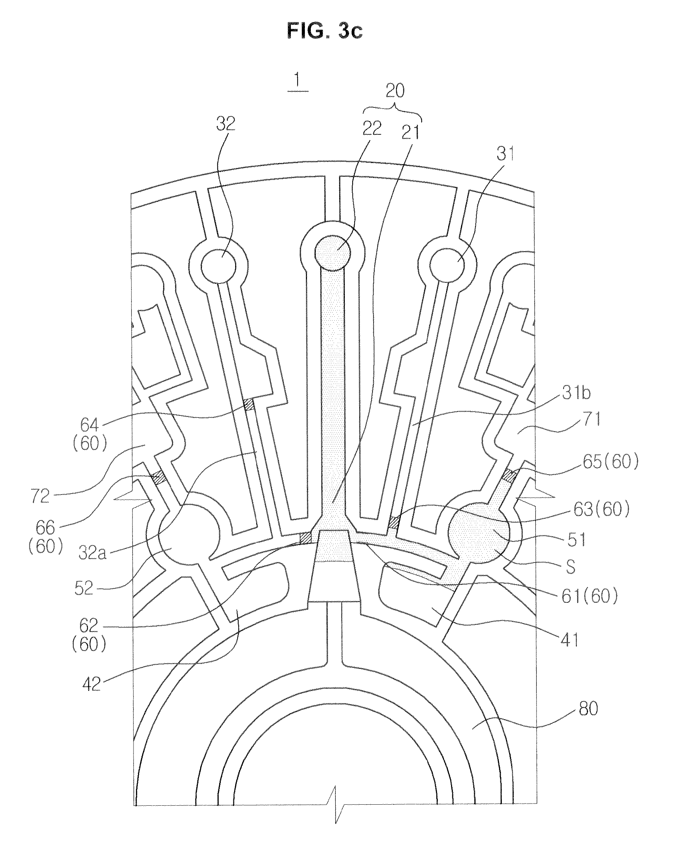

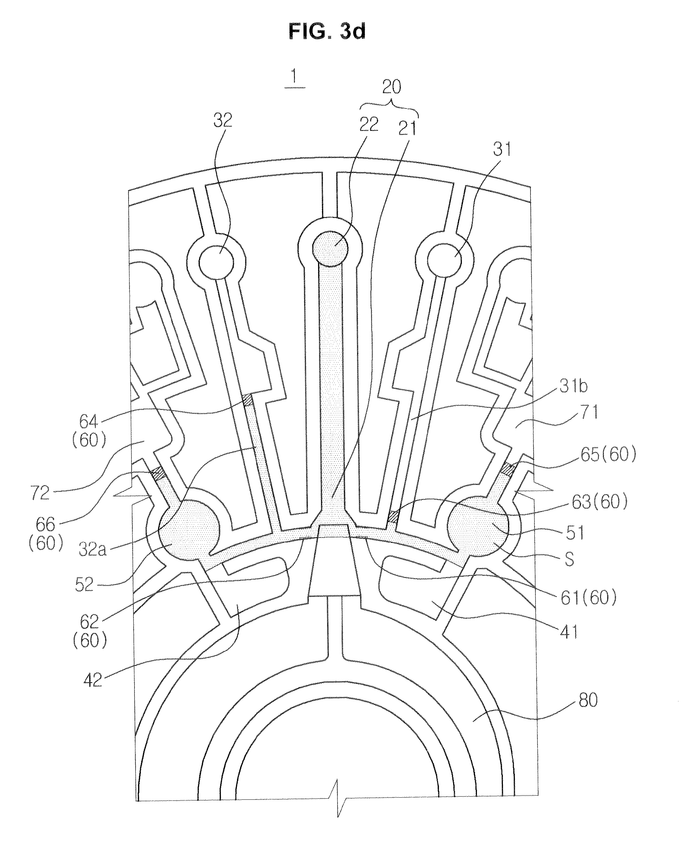

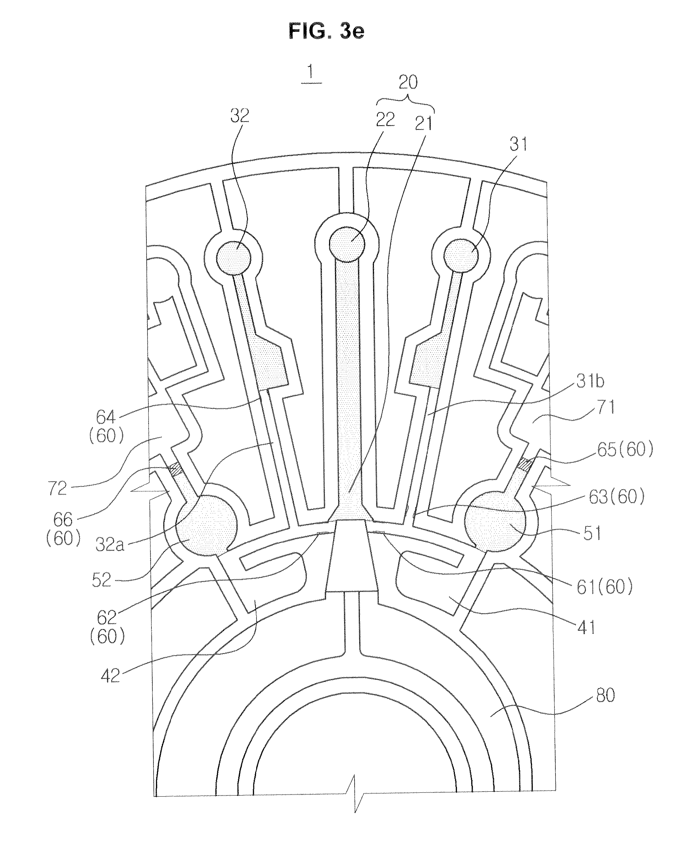

FIG. 3A is a drawing illustrating a state in which a sample S is injected into the injection chamber 80. The sample S in the injection chamber 80 is moved to the sample separation chamber 20 as shown in FIG. 3B. Referring to FIG. 3C, the first valve 61 located between the first metering unit 10a and the sample separation chamber 20 is melted to open the channel, so that the sample S is moved into the first metering unit 10a and the first accommodation chamber 41. That is, the sample in the first metering chamber 51 is a sample that is metered, and the sample remaining after being accommodated in the first metering chamber 51 is accommodated in the first accommodation chamber 41. Referring to FIG. 3D, the second valve 62 located between the second metering unit 10b and the sample separation chamber 20 is melted to open the channel, and the sample S in the first accommodation chamber 41 and a portion of the sample S in the sample separation chamber 20 are accommodated in the second metering chamber 52. The sample S remaining after being accommodated in the second metering chamber 52 may stay in the channel. In addition, in a case in which the amount of the sample is great, the sample remaining after being metered in the second accommodation chamber 42 may be accommodated in the second accommodation chamber 42. FIG. 3E is a drawing illustrating a state in which the third valve 63 and the further valve 64 located at the inlet of the first waste chamber 31 and the inlet of the second waste chamber 32 are melted and the channels 32a and 31b are opened. As the third valve 63 and the fourth valve 64 are opened, the sample S remaining in the channel and the second accommodation chamber 42 may be accommodated in the first waste chamber 31 and the second waste chamber 32.

Accordingly, the metered samples are accommodated in the first metering chamber 51 and the second metering chamber 52. Thereafter, as the fifth valve 65 and the sixth valve 66 located at the outlet of the first metering chamber 51 and the outlet of the second metering chamber 52, respectively, are melted, and the channels are opened, the samples are moved to the reaction units 71 and 72 such that a test or tests may be performed using the sample S.

In accordance with an exemplary embodiment, since the plurality of metering units 10a and 10b are provided, a plurality of metered samples may be prepared at one time. Accordingly, a plurality of tests may be conveniently performed within a single disk. In particular, when a stepwise test is performed using a single sample, a metering chamber is essential, and since the metering chamber in accordance with an exemplary embodiment is provided in plural, the test of the sample may be performed in a short period of time, thereby enhancing the test efficiency. In addition, the metering chambers 51 and 52 are connected to the accommodation chambers 41 and 42, respectively, which are configured to accommodate the samples remaining after being accommodated in the metering chambers 51 and 52, thereby preventing the samples remaining after the metering which are not accommodated in the metering chambers 51 and 52 from overflowing. The samples remaining after the metering which are not accommodated in the metering chambers 51 and 52 are delivered to the waste chambers 31 and 32 from the accommodation chambers 41 and 42 according to a rotation of the platform 4, and thus do not affect subsequent tests, thereby increasing to the likelihood of obtaining accurate test results.

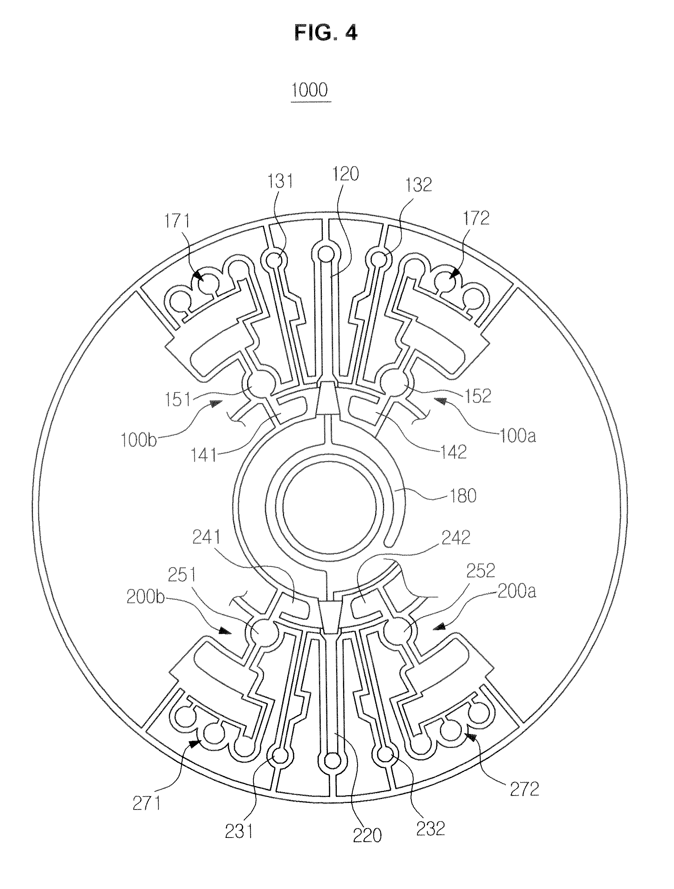

FIG. 4 is a drawing illustrating a microfluidic device in accordance with another exemplary embodiment.

Referring to FIG. 4, a microfluidic device 1000 includes a test unit including metering units 100a, 100b, 200a and 200b, and reaction units 171, 172, 271 and 272. The test unit may be provided in plural. Since two metering units are provided for one sample separation chamber, a total of four metering units 100a, 100b, 200a and 200b are provided. Accordingly, a total of four tests may be simultaneously performed on a single sample.

In detail, a first test unit and a second test unit are provided, and the first test unit includes a first metering unit 100a and a second metering unit 100b, and the second test unit includes a third metering unit 200a and a fourth metering unit 200b.

The metering units 100a, 100b, 200a and 200b include metering chambers 151, 152, 251 and 252, respectively, accommodation chambers 141, 142, 241 and 242, respectively, and waste chambers 131, 132, 231 and 232, respectively. In addition, the metering units 100a, 100b, 200a and 200b may be connected to reaction units 171, 172, 271 and 272, respectively, to facilitate a test or tests. It is understood that more than four metering units may be provided according to other exemplary embodiment.

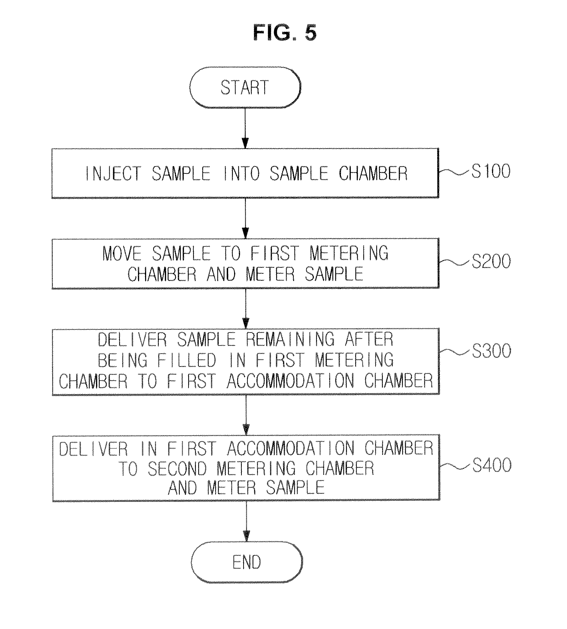

FIG. 5 is a flowchart showing a method of controlling a microfludic device in accordance with an exemplary embodiment.

Referring to FIG. 5, a sample is injected into the sample chamber 80 at operation S100. The sample injected into the sample chamber 80 is moved to the first metering chamber 51 and metered at operation S200. The sample is accommodated in the sample separation chamber 20 before being moved to the first metering chamber 51 by centrifugal separation. The portion of the sample remaining after the rest of the sample is filled in the first metering chamber 51 is delivered to the first accommodation chamber 41 and accommodated therein at operation S300. The sample in the first accommodation chamber 41 is then delivered to the second metering chamber 52 at operation S400, so that the sample is metered a total of two times. The portion of the sample remaining after the rest of the sample is metered in the second metering chamber 52 may be delivered to the second accommodation chamber 42 so as to prevent the sample from overflowing. The portion of the sample remaining after the rest of the sample is accommodated in the first metering chamber 51 and the second metering chamber 52 may be delivered to the first waste chamber 31 and the second waster chamber 32.

The movement of the sample may be controlled by a series of valves 60 located between the chambers. Depending on whether the first valve 61 located between the sample separation chamber 20 and the first metering chamber 51 and the second valve 62 located between the sample separation chamber 20 and the second metering chamber 52 are melted, the movement of the sample to the metering chambers 51 and 52 may be adjusted. Depending on whether the third valve 63 located between the first metering chamber 51 and the first waste chamber 31 and the fourth valve 64 located between the second metering chamber 52 and the second waste chamber 32 are melted, the movement of the sample to the waste chambers 31 and 32 may be adjusted. The test on the metered samples may be conducted depending on whether the fifth valve 65 and the sixth valve 66 located at the outlets of the first and second chambers 51 and 52 are melted, respectively.

As is apparent from the above, the structure of the metering unit of the microfluidic device is changed so that an injected fluid may be subjected to a plurality of metering operations, thereby enhancing the spatial efficiency of the microfluidic device. In addition, a plurality of tests can be performed in a single microfluidic device at the same time, so that the number of test items which may be tested is increased and the time required for performing the plurality of tests is reduced, thereby enhancing the efficiency of performing tests.

Although a few exemplary embodiments have been shown and described, it would be appreciated by those skilled in the art that changes may be made in these exemplary embodiments without departing from the principles and spirit of the disclosure, the scope of which is defined in the claims and their equivalents.

## Claims

1. A microfluidic device comprising:
a platform comprising:
at least one chamber provided on the platform to accommodate a sample;
at least one channel connected to the at least one chamber; and
at least one metering unit configured to meter an amount of the sample,
wherein the at least one metering unit comprises:
a metering chamber configured to measure an amount of the sample; and
an accommodation chamber connected to the metering chamber, thereby accommodating the sample to prevent the sample from being overflowed.

2. The microfluidic device of claim 1, wherein the metering unit further comprises a waste chamber connected to the metering chamber and the accommodation chamber so as to accommodate a sample inside the accommodation chamber and the channel therein.

3. The microfluidic device of claim 1, wherein the accommodation chamber is located closer to a center of the platform than the metering chamber.

4. The microfluidic device of claim 2, wherein the waste chamber is located farther away from a center of the platform than the metering chamber.

5. The microfluidic device of claim 1, wherein the platform further comprises a sample separation chamber to separate the sample.

6. The microfluidic device of claim 5, wherein the metering unit includes a first metering unit and a second metering unit to simultaneously perform a plurality of tests.

7. The microfluidic device of claim 6, wherein the first metering unit is connected to one side of the sample separation chamber, and the second metering unit is connected to other side of the sample separation chamber.

8. The microfluidic device of claim 1, wherein the platform further comprises a valve located on at least one of an inlet and an outlet of the metering unit, to control inflow or outflow into/from the metering unit.

9. The microfluidic device of claim 1, wherein the platform further comprises at least one reaction chamber configured to accommodate a reagent that causes an optical or electrical reaction with the sample delivered after being metered by the metering chamber,
wherein the reaction chamber is located farther towards an outer side of the platform than the metering chamber.

10. The microfluidic device of claim 9, wherein the platform further comprises a detection chamber to detect a sample that is reacted in the reaction chamber,
wherein the detection chamber is located farther towards an outer side of the platform than the reaction chamber.

11. A method of controlling a microfluidic device comprising a platform, wherein the platform comprises a sample separation chamber to separate a sample, a first metering chamber and a second metering chamber that are configured to meter a sample, and a first accommodation chamber to prevent a sample remaining after being filled in the first metering chamber from being overflowed, the method comprising:
injecting a sample into the platform;
moving the sample to the first metering chamber and the first accommodation chamber; and
moving the sample inside the first accommodation chamber and a portion of the sample inside the sample separation chamber to the second metering chamber, such that the sample in the first metering chamber and the sample in the second metering chamber are metered, respectively.

12. The method of claim 11, further comprising delivering a sample remaining after being metered in the second metering chamber into a second accommodation chamber to prevent the remaining sample from being overflowed from the second metering chamber.

13. The method of claim 12, further comprising delivering a sample remaining after being metered in the first metering chamber and a sample remaining after being metered in the second metering chamber to a first waste chamber and a second waste chamber connected to the first metering chamber and the second metering chamber, respectively.

14. The method of claim 13, wherein in the delivering of the samples into the first waste chamber and the second waste chamber, a valve located between the first metering chamber and the first waste chamber and a valve located between the second metering chamber and the second waste chamber are opened such that fluid moves.

15. The method of claim 11, further comprising separating a sample in the sample separation chamber, and delivering the sample to the first metering chamber and the second metering chamber,
wherein in the delivering of the sample from the sample separation chamber to the first and second metering chambers, a valve located between the sample separation chamber and the first metering chamber and a valve located between the sample separation chamber and the second metering chamber are opened such that the sample moves.
